# EUROPÄISCHE PATENTANMELDUNG

(11) **EP 2 357 444 A1**
(43) Veröffentlichungstag der Anmeldung: **17.08.2011**
(21) Anmeldenummer: 11000403.3
(22) Anmeldetag: 20.01.2011
(51) Int. Cl.: G01B 13/12, B23Q 17/00

(54) **Verfahren zur Messung der relativen Position zweier Bauteile**

(30) Priorität: 22.01.2010 DE 102010005372
(71) Anmelder: IQ2 Patentverwaltung UG (haftungsbeschränkt), 72654 Neckartenzlingen (DE)
(72) Erfinder:
(74) Vertreter: Kohler Schmid Möbus

(57) **Zusammenfassung**

Ein Verfahren zur Messung und/oder Kontrolle der relative Position zweier Bauteile (10, 11) zueinander im Mikrometerbereich, bei dem zwischen die Bauteile Luft geleitet wird, wobei in der Luftzuleitung (19) ein mindestens thermischer Massendurchflusssensor (21) angeordnet ist, dessen Signal durch eine Auswerte- und Steuereinrichtung (23) ausgewertet wird.

## Beschreibung

Die Erfindung betrifft ein Verfahren zur Messung und/oder Kontrolle der relativen Position zweier Bauteile zueinander im Mikrometer- oder Submikrometerbereich.

Es sind bereits verschiedene, hoch genaue Messverfahren, insbesondere zum Vermessen von Gegenständen, bekannt. Beispielhaft seien hier mechanische Mikrometer sowie Lasermikrometer genannt. Mechanische Mikrometer haben dabei den Nachteil, dass mit ihnen sehr kleine Abstände zwischen zwei Bauteilen nicht gemessen werden können. Lasermikrometer sind hierzu prinzipiell in der Lage, erfordern jedoch, dass der Zwischenraum zwischen den Bauteilen optisch zugänglich ist. Außerdem sind Lasermikrometer relativ teuer in der Anschauung.

Aus der EP 0 298 239 A2 ist ein Verfahren zur Kontrolle der Position eines eingewechselten Werkzeugs an einer Werkzeugmaschine bekannt, bei dem die zur Reinigung des Werkzeugsitzes verwendete Druckluft, die in den Ringspalt zwischen dem Werkzeug und der Werkzeugspindel eingeblasen wird, gleichzeitig dazu benutzt wird, den Passsitz zwischen Werkzeug und Werkzeugspindel zu kontrollieren. Sitzt das Werkzeug richtig, wird durch die weiter anströmende Luft ein Staudruck verursacht, der von der Maschinensteuerung registriert wird. Ist der Staudruck ausreichend hoch, wird die Maschine für den weiteren Betrieb frei gegeben, andernfalls blockiert. Dieses Kontrollverfahren ist preisgünstig, jedoch relativ ungenau.

Der vorliegenden Erfindung llegt die Aufgabe zugrunde, ein Verfahren zur Messung und/oder der Kontrolle der relativen Position zweier Bauteile zueinander bereitzustellen, mit dem es möglich ist, auf wirtschaftliche Weise den gegenseitigen Abstand zweier Bauteile auf wenige Mikrometer bzw. Bruchteile von Mikrometern genau festzustellen bzw. den Abstand auf das Über- oder Unterschreiten eines Schwellwerts zu überprüfen.

Die Aufgabe wird gelöst mit einem Verfahren zur Messung und/oder Kontrolle der relativen Position zweier Bauteile zueinander im Mikrometerbereich, das dadurch gekennzeichnet ist, dass zwischen die Bauteile Luft geleitet wird, wobei in der Luftzuleitung mindestens ein thermischer Massendurchflusssensor angeordnet ist, dessen Signal durch eine Auswerte-und Steuereinrichtung ausgewertet wird. Die Unteransprüche geben vorteilhafte Ausgestaltungen des Verfahrens an.

Der durch eine oder mehrere Austrittsöffnungen austretende Luftmassenstrom ist ein Maß für den gegenseitigen Abstand oder die Lage der beiden Bauteile. Der Luftmassenstrom wird vom thermischen Massendurchflusssensor erfasst und ausgewertet. Das durch den Spalt zwischen den Bauteilen gegenüber der Atmosphäre erhöhte Druckniveau für den Luftmassenstrom wird hierbei entweder auf einen konstanten Wert geregelt oder über einen Drucksensor erfasst und ebenfalls der Auswerte- und Steuereinheit zugeführt.

Das erfindungsgemäße Verfahren kann mit geringem konstruktivem Aufwand realisiert werden. Es ist außerdem berührungslos und erlaubt auch eine Abstandsmessung von Bauteilen, deren Form und Lage eine Abstandsmessung mittels eines Lasermikrometers nicht mehr zulassen würde. Im Gegensatz zu einem Laserstrahl kann die zur Messung eingesetzte Luft durch die Bauteile umgelenkt und somit beispielsweise einem innen liegend angeordneten Messspalt zugeführt werden. Das erfindungsgemäße Verfahren lässt sich somit für nahezu beliebige Aufgaben im Bereich der Abstandsmessung einsetzen. Die Bauteile können dabei auch mehrteilig sein und sich relativ zueinander bewegen. Der thermische Massendurchflusssensor reagiert dabei hoch empfindlich auf Veränderungen des Massenstroms der Luft, welcher bei konstantem Versorgungsdruck aus Veränderungen der relativen Position des oder der den idealerweise verschleißfreien und unveränderlichen Austrittsöffnungen gegenüberliegenden Bauteilen hervorgerufen wird. Der Einfluss eines sich verändernden Versorgungsdrucks kann durch dessen Erfassung in der Auswerte- und Steuereinrichtung kompensiert werden.

Das erfindungsgemäße Verfahren zeichnet sich weiter dadurch aus, dass die für seine Durchführung notwendigen Einrichtungen wie eine Druckluftquelle, Luftzuführungen, Luftdüsen, der Massendurchflusssensor sowie die Auswerte- und Steuereinrichtung leicht nachgerüstet werden können bzw. in einer mobilen Einheit für verschiedene Messaufgaben eingesetzt werden können. Dabei ist darauf zu achten, dass insbesondere die Luftaustrittsöffnungen der Düsen verschleißfrei ausgebildet und unempfindlich gegen Umwelteinflüsse sind.

Bei einer bevorzugten Ausgestaltung des Verfahrens wird die Luft an mehreren, vorzugsweise gleichmäßig über den Messbereich verteilten Stellen zwischen die Bauteile geleitet. Auf diese Weise kann der gegenseitige Abstand zweier Bauteile über eine größere Fläche mit hoher Genauigkeit bestimmt werden. Dabei ist es auch möglich, die Luftzuleitungen zu den einzelnen Stellen mit Ventilen zu versehen, sodass die Messungen an den verschiedenen Stellen nacheinander vorgenommen werden können, um so beispielsweise auf einfache Weise Maschinenteile bzw. Bauteile mithilfe einer entsprechenden Auswertesoftware, die auch eine Visualisierung der relativen Lage der Teile erlaubt, zueinander ausrichten zu können. Soll lediglich kontrolliert werden, ob die beiden Bauteile dicht aneinander liegen, kann die Luft zu allen Stellen gleichzeitig zugeführt werden. Das Verfahren dient dann ausschließüch einer Leckage-Kontrolle oder der Kontrolle eines Passsitzes und der Bestimmung des Maßes des gegenseitigen Abstands zweier Bauteile.

Weitere Vorteile ergeben sich, wenn als Massendurchflusssensor ein Sensor mit einem elektrisch beheizten Draht eingesetzt wird und die dem Draht durch die Luftströmung pro Zeiteinheit entzogene Wärmemenge gemessen wird. Je größer der Abstand der beiden Bauteile ist, desto größer ist die Luftströmung und damit die Abkühlung des Drahtes.

Die Verwendung dieses Messprinzips gewährleistet äußerst präzise Messergebnisse. Vorzugsweise kann dabei der Draht senkrecht zur Strömungsrichtung der Luft angeordnet werden. Aber auch andere thermische Massendurchflusssensoren wie auf Membrantechnologie basierende Sensoren sind einsetzbar.

Die zur Messung verwendete Luft kann durch separate Zuleitungen mit Austrittsdüsen, die vorzugsweise an einem der Bauteile in einer definierten Position befestigt werden, und/oder aber auch durch eines der Bauteile hindurch zugeführt werden. Die Zuführung durch eines der Bauteile ist insbesondere dann vorteilhaft, wenn die Messung an innen liegenden, von außen nicht zugänglichen Bereichen der Bauteile durchgeführt werden sollen.

Besonders bevorzugt kann das erfindungsgemäße Verfahren dazu eingesetzt werden, Abstände von Bauteilen im Bereich von 0,5 - 900 µm zu messen. Selbstverständlich können aber auch größere Abstände gemessen werden, oder das Verfahren wird dafür eingesetzt, die dichte Anlage zweier Bauteile zu überprüfen.

Für das erfindungsgemäße Verfahren sind viele Einsatzbereiche denkbar. Bevorzugt kann es zur Kontrolle der Plananlage eines Werkzeugs in einer Werkzeugspindel oder einem Werkzeugrevolver einer Werkzeugmaschine eingesetzt werden. Liegt das Messsignal des Durchflusssensors unterhalb eines vorgebbaren Schwellwerts, kann auf eine exakte Planlage des Werkzeugs geschlossen werden.

Das thermische Messverfahren erlaubt zusammen mit den Düsengeometrien, -anzahl und -anordnung sowie dem Luftdruck die Auswertung der Anwesenheit von Objekten, die Parallelität, relative Lage und Abstand von Bauteilen sowie die Rauigkeit der Oberflächen der Bauteile. Auch die Messung des Abstandes in Z-Richtung zweier in der X-Y-Ebene relativ zueinander bewegter Bauteile ist möglich.

Ein weiterer Anwendungsbereich des Verfahrens besteht in der Kontrolle von Luftlagern, insbesondere von Luftlagern von Messmaschinen. Diese Maschinen sind auf definierten Luftpolstern gelagert, um eine weitgehende Schwingungsentkopplung vom Untergrund zu erreichen. Der Luftspalt, in dem sich das Luftpolster ausbildet, kann mithilfe des erfindungsgemäßen Verfahrens gemessen und mit einem Sollwert verglichen werden. Ist ein Luftlager defekt, d. h. der Luftspalt zu gering bzw. gar nicht mehr vorhanden, kann ein entsprechendes Fehlersignal ausgelöst werden.

Auch eine Kontrolle des Freilaufs von Führungen, z. B. Gleit- oder Rollführungen kann mit diesem Messprinzip erfolgen. Ebenso kann der "Luftteppich" auf einem Transportband kontrolliert werden, das für einen slcheren Teiletransport nötig ist.

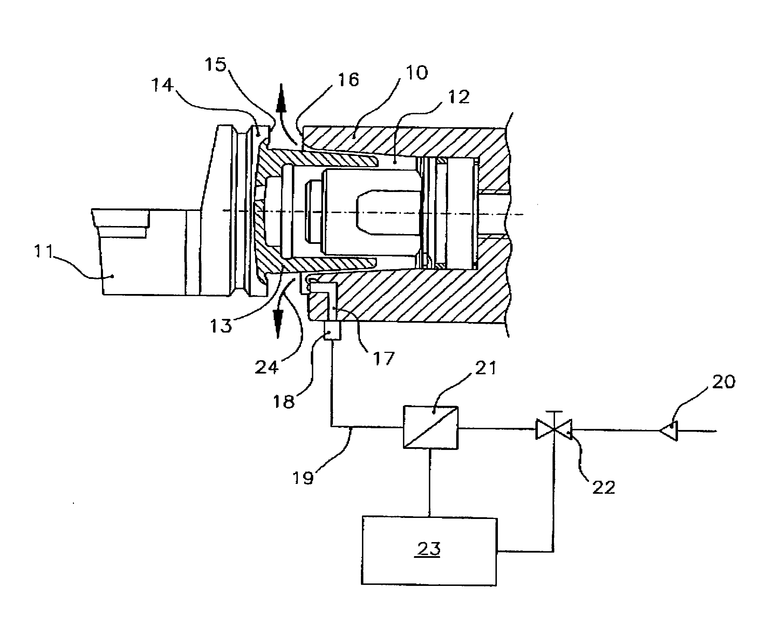

Nachfolgend wird beispielhaft ein Anwendungsfall eines erfindungsgemäßen Verfahrens anhand der Zeichnung näher beschrieben.

Die einzige Figur zeigt eine Werkzeugspindel 10 und ein Werkzeug 11, wobei der Passsitz des Werkzeugs 11 in der Werkzeugspindel 10 nach dem erfindungsgemäßen Verfahren überprüft wird. Die Werkzeugspindel 10 weist eine konische Aufnahme 12 für einen entsprechend konisch geformten Werkzeugträger 13 auf, der mit dem Werkzeug 11 verbunden ist, Der Werkzeugträger 13 weist einen ringförmigen Bund 14 auf, der nach vollständigem Einsetzen des Werkzeugs 11 in die Spindel 10 mit seiner Fläche 15 an einer endseitigen Planfläche 16 der Werkzeugspindel 10 zur Anlage kommt. Zur Kontrolle des Passsitzes zwischen Werkzeug 11 und Werkzeugspindel 10 wird zwischen die Flächen 15 und 16 Luft geführt. Dies geschieht über eine oder mehrere Luftaustrittsöffnungen 17 in der Werkzeugspindel 10, die an der Fläche 16 enden. An den Luftaustrittsöffnungen 17 ist über einen Adapter 18 eine Luftzuleitung 19 angeschlossen. Die Luftzuleitung 19 ist mit einer hier nicht näher dargestellten und/durch einen Pfeil 20 symbolisierten Luftquelle verbunden. In der Luftzuleitung 19 sind außerdem ein thermischer Massendurchflusssensor 21 sowie ein Ventil 22 angeordnet. Sowohl der Massendurchflusssensor 21 als auch das Ventil 22 sind mit einer Auswerte- und Steuereinrichtung 23 verbunden. Nach vollständigem Einsetzen des Werkzeugs 11 in die Werkzeugspindel 10 wird über die Auswerte- und Steuereinrichtung 23 das Ventil 22 geöffnet, Außerdem wird die Temperatur beispielsweise eines elektrisch beheizten Drahtes des Massendurchflusssensors 21 auf direkte oder indirekte Weise durch die Auswerte- und Steuereinrichtung 23 überwacht. Außerdem wird der Versorgungsdruck der Luft entweder konstant gehalten oder ebenfalls gemessen und bei der Auswertung berücksichtigt.

Ist der Passsitz zwischen dem Werkzeug 11 und der Werkzeugspindel 10 einwandfrei, so liegt die Luftströmung zwischen den Flächen 15 und 16 nach außen unterhalb eines vorgegebenen Schwellwerts. Dies bedeutet, dass auch in der Luftleitung 19 dieser Schwellwert nicht überschritten wird. Der Draht des Sensors 21 wird daher nur wenig gekühlt, was durch die Auswerte- und Steuereinrichtung erkannt wird. Bei fehlerhaftem Passsitz, beispielsweise aufgrund zwischen den Flächen 15 und 16 befindlicher Späne kann dagegen mehr Luft zwischen den Flächen 15 und 16 nach außen strömen, was durch Pfeile 24 angedeutet ist. Dieses Ausströmen von Luft führt zu einem erhöhten Luftstrom in der Luftzuleitung 19 und damit zu einem Abkühlen des Drahtes des Sensors 21 über ein erlaubtes Mindestmaß hinaus, was wiederum von der Auswerte- und Steuereinrichtung 23 registriert wird. In diesem Fall kann von der Auswerte- und Steuereinrichtung 23 ein Fehlersignal ausgegeben und die Werkzeugmaschine gestoppt werden, bis der fehlerhafte Passsitz des Werkzeugs 11 beseitigt worden ist.

## Patentansprüche

1. Verfahren zur Messung und/oder Kontrolle der relativen Position zweier Bauteile (10, 11) zueinander im Mikrometerbereich, **dadurch gekennzeichnet, dass** zwischen die Bauteile (10, 11) Luft geleitet wird, wobei in der Luftzuleitung (19) mindestens ein thermischer Massendurchflusssensor (21) angeordnet ist, dessen Signal durch eine Auswerte- und Steuereinrichtung (23) ausgewertet wird.

2. Verfahren nach Anspruch 1, **dadurch gekennzeichnet, dass** die Luft an mehreren, vorzugsweise gleichmäßig über den Messbereich verteilten Stellen zwischen die Bauteile (10, 11) geleitet wird.

3. Verfahren nach Anspruch 2, **dadurch gekennzeichnet, dass** Luft nacheinander zu den verschiedenen Stellen geleitet und der Abstand der Bauteile gemessen wird und die Bauteile unter Auswertung der Messergebnisse relativ zueinander ausgerichtet werden.

4. Verfahren nach einem der Ansprüche 1 bis 3, **dadurch gekennzeichnet, dass** als Durchflusssensor (21) ein Sensor mit einem elektrisch beheizten Draht eingesetzt wird und die dem Draht durch die Luftströmung pro Zeiteinheit entzogene Wärmemenge gemessen wird.

5. Verfahren nach Anspruch 4, **dadurch gekennzeichnet, dass** der Draht senkrecht zur Strömungsrichtung der Luft angeordnet wird.

6. Verfahren nach einem der Ansprüche 1 bis 5, **dadurch gekennzeichnet, dass** die Luft durch eines der Bauteile (10, 11) hindurch zugeführt wird und/oder dass eine oder mehrere Austrittsdüsen von Luftzuleitungen an einer definierten Position an einem der Bauteile (10, 11) befestigt werden.

7. Verfahren nach einem der Ansprüche 1 bis 6, **dadurch gekennzeichnet, dass** Abstände von Bauteilen (10, 11) im Bereich zwischen 0,5 - 900 µm gemessen werden.

8. Verwendung eines Verfahrens nach einem der Ansprüche 1 bis 7 zur Kontrolle der Position eines Werkzeugs in einer Werkzeugspindel einer Werkzeugmaschine oder in einem Werkzeugrevolver.

9. Verwendung eines verfahrens nach einem der Ansprüche 1 bis 7 zur Kontrolle, Steuerung oder Regelung von Luftlagern, insbesondere von Luftlagern einer Messmaschine.

10. Verwendung des Verfahrens nach einem der Ansprüche 1 bis 7 zur Überprüfung des Freilaufs von Führungen.
